# EUROPÄISCHE PATENTSCHRIFT

(11) **EP 1 253 392 B1**
(45) Veröffentlichungstag und Bekanntmachung des Hinweises auf die Patenterteilung: **06.10.2004**
(21) Anmeldenummer: 02003492.2
(22) Anmeldetag: 15.02.2002
(51) Int. Cl.: F28D 1/04, F01P 3/18, F01P 11/10, F02B 29/04

(54) **Anordnung zur Kühlung**
Cooling arrangement
Système de refroidissement

(30) Priorität: 25.04.2001 DE 10120483
(43) Veröffentlichungstag der Anmeldung: 30.10.2002
(73) Patentinhaber: Modine Manufacturing Company, Racine, Wisconsin 53403-2552 (US)
(72) Erfinder: Zobel, Werner, Dipl.-Ing., 71052 Böblingen (DE); Knecht, Wolfgang, Dipl.-Ing., 70599 Stuttgart (DE); Welchner, Daniela, 73119 Zell u.A. (DE); Reichler, Mark, Dipl.-Ing., 70569 Stuttgart (DE); Soldner, Jörg, Dr.-Ing., 71139 Ehningen (DE)
(74) Vertreter: Wolter, Klaus-Dietrich

(56) Entgegenhaltungen:
- EP-A- 1 094 290
- EP-A- 1 146 210
- DE-A- 19 724 728
- US-A- 4 592 414
- US-A- 5 697 429
- US-A- 6 129 056
- US-A- 6 164 909

## Beschreibung

Die Erfindung betrifft eine Anordnung zur Kühlung (Temperierung) von Betriebsstoffen für Nutzfahrzeuge mit den Merkmalen des Oberbegriffs im Anspruch 1.

Die Anordnung ist in der noch nicht veröffentlichten deutschen Anmeldung DE 199 50 755.4, aber auch in einer Reihe anderer Veröffentlichungen (EP 1 045 217 A1) beschrieben worden. In der noch nicht veröffentlichten Anmeldung, die der gleichen Anmelderin gehört, geht es darum, die Effizienz der Kühlanlage weiter zu verbessern, was dort durch eine optimierte Position des Radiallaufrades innerhalb der Kühlanlage erreicht wird.

Die Kühlanlagen der im Oberbegriff beschriebenen Art sind grundsätzlich effizienter als konventionelle Kühlanlagen mit in Kühlluftströmungsrichtung hintereinander angeordneten einzelnen Kühlern, weil bei den Kühlanlagen der beschriebenen Art Radialventilatoren eingesetzt werden können, die einen größeren Luftvolumenstrom zur Verfügung stellen als Axialventilatoren und bessere Laufeigenschaften aufweisen.

Aus der DE 197 24 728 A1 ist eine kastenförmige Kühlanlage bekannt, bei der die Kühlnetzfläche des oben angeordneten Ladeluftkühlers mittels einer außen am Kühler angeordneten Schiebejalousie abgedeckt oder geöffnet werden kann, um den Volumenstrom auf die Kühlnetzfläche der anderen Kühler nach Bedarf variieren zu können. Der oben angeordnete Ladeluftkühler erfordert das Vorsehen von Luftführungskanälen, um die das Kühlnetz des Ladeluftkühlers durchströmende Kühlluft abzuführen, wodurch dort oben Bauraum beansprucht wird.

Bei Nutzfahrzeugen moderner Bauart ist auf verschiedene, sich technisch scheinbar widersprechende Anforderungen zu achten. Zum einen wird angestrebt, den Komfort für die Bedienperson unter anderem dadurch zu verbessern, dass man ihr einen größeren Raum zur Verfügung stellt, indem ein ebener Kabinenboden verlangt wird. Bei älteren Bauarten ist der Kabinenboden in das Fahrerhaus eingezogen, um darunter Platz zu haben, z. B. für die Kühlanlage.

Zum anderen wird trotz kleineren Bauraums, z. B. für die Kühlanlage, die Bereitstellung größerer Kühlleistungen erwartet, die den steigenden Motorleistungen entsprechen müssen. All das bei deutlich zu reduzierenden Emissionswerten.

Hier ist Raum für erfinderische Leistungen vorhanden, um die scheinbar antagonistischen Widersprüche durch intelligente Lösungen aufzuheben.

Bei den bereits kurz angerissenen konventionellen Kühlanlagen kann den geforderten höheren Kühlleistungen durch die Vergrößerung der von der Kühlluft angeströmten Stirnfläche der Kühlanlage entsprochen werden, die dazu bis auf über 1 m² anwachsen müsste. Denn die geforderte deutlich gesteigerte Kühlleistung durch die weitere Optimierung der einzelnen Wärmetauscher selbst zu erbringen, scheint bei dem bereits erreichten hohen Stand solcher Optimierungen relativ aussichtslos zu sein. Die Vergrößerung der Stirnfläche in Fahrzeughochachse ist wegen der oben geschilderten Umstände jedoch nicht möglich. Also bliebe eine deutliche Vergrößerung in Richtung der Fahrzeugquerachse, die jedoch deshalb nicht zulässig ist, weil dadurch das gesamte Fahrzeugkonzept zu ändern wäre, wobei darüber hinaus solchen Maßnahmen aus verkehrstechnischen Gründen Grenzen gesetzt sind. Größere Stirnflächen bedeuten letztlich größere Wärmetauscher, was selbstverständlich ein Kostenfaktor ist.

Die Erfinder haben sich die Aufgabe gestellt, das geschilderte Spannungsfeld aufzulösen, indem eine Anordnung zur Verfügung gestellt werden soll, die ohne Veränderung des Fahrzeugkonzepts einbaubar ist und sowohl die geforderte Kühlleistung bringt als auch den ebenen Kabinenboden gewährleistet.

Die erfindungsgemäße Lösung ergibt sich bei der im Oberbegriff des Anspruchs 1 beschriebenen Anordnung durch dessen kennzeichnenden Merkmale.

Weil der Ladeluftkühler ein vom Kühlmittel des Motors des Nutzfahrzeuges durchströmter Wärmetauscher ist, dessen zum Inneren der Anordnung weisende eine Breitseite von der Kühlluft angeblasen ist, die das Abströmen von Kühlluft nach oben verhindert, welche lediglich durch das Kühlnetz der anderen Kühler hindurchströmt, wird die vollständige Lösung der Aufgabenstellung erreicht. Unter der erwähnten Breitseite soll auch eine Zwischenwand oder dergleichen fallen, die die Breitseite abdeckt, so dass also dann die Zwischenwand von der Kühlluft anblasbar ist. Eine solche Zwischenwand muß nicht eben sein. Sie kann in Form eines Leitelements für die Kühlluft ausgebildet sein und deshalb jede beliebige Formgestaltung aufweisen. Der Wärmetauscher ist in seiner Höhe, die der Tiefe des Kühlnetzes des Ladeluftkühlers bei bekannten Anordnungen entspricht, deutlich reduziert worden. Die im Stand der Technik in diesem Bereich notwendigen Luftführungskanäle entfallen vollständig. Dadurch ist es möglich geworden, auf das Einziehen des Kabinenbodens in das Führerhaus zu verzichten. Die gesamte Anordnung ist in ihrem in Richtung der Fahrzeugbreite weisenden Maß so schmal geblieben, dass die Anordnung ohne Veränderung des Nutzfahrzeugs am Fahrwerk, am Fahrzeugrahmen usw. einbaubar ist. Darüber hinaus wird die geforderte größere Kühlleistung wunschgemäß zur Verfügung gestellt. Es hat sich ergeben, dass die Kühlleistung der Kühler, die die Kühlmittelkühler sind, durch den größeren Volumenstrom, der nach der Erfindung durch das Kühlnetz dieser Kühler strömen kann, gesteigert wurde. Dies wurde erreicht, obwohl nach der Erfindung ein Teil der Kühlflüssigkeit bzw. ihrer Kühlkapazität, für die Kühlung der Ladeluft herangezogen wird. Bei einem solchen mit Kühlmittel gekühlten Ladeluftkühler ist dessen bedarfsgerechte Regelung - nicht in allen Betriebsphasen ist die Kühlung der Ladeluft erforderlich - verhältnismäßig einfacher und genauer zu bewerkstelligen als bei einem luftgekühlten Ladeluftkühler. Ferner hat auch der die Breitseite des Wärmetauschers anströmende Kühlluftstrom eine gewisse Kühlungswirkung, die nicht zu vernachlässigen ist.

Die Wirksamkeit der Erfindung kann durch Weiterbildungen verstärkt werden. So ist es beispielsweise denkbar, den Wärmetauscher zumindest um einen geringen Betrag etwa in der Mitte nach unten abzuknicken. Dadurch wird einerseits ein noch größerer Platz nach oben geschaffen und andererseits übt die nach innen weisende Breitseite, die der Abknickung folgt, eine gewisse die Kühlluft leitende bzw. auf die seitlichen Kühler richtende Wirkung aus. Die gleiche oder noch bessere Wirkungen können durch den Einsatz von Luftleitblechen innerhalb der Anordnung erreicht werden, die an der Rückwand und / oder an der Frontwand befestigt sein können.

Der Anspruch 2 stellt den günstigen Anschluß der Ladeluftleitungen an den Wärmetauscher sicher.

Die Ansprüche 3, 4, 5 und 6 beschreiben eine bevorzugte Ausbildung des Wärmetauschers.

Die Ansprüche 8 und 9 sehen die zusätzliche Anordnung von in das Fahrzeugkonzept passenden Wärmetauschern oder Kühlern in der Rückwand der Anordnung vor, die dadurch völlig ohne Beanspruchung von außerhalb der Anordnung sehr knapp bemessenem Bauraum möglich ist.

Anspruch 7 sieht alternativ vor, die Kühlflüssigkeit des Motors direkt aus dem benachbarten Kühlflüssigkeitskühler zu entnehmen, so daß auf Zu - und Abführungsleitungen für die Kühlflüssigkeit vollständig oder teilweise verzichtet werden kann. Die geschieht durch Verwendung der in der nicht vorveröffentlichten deutschen Anmeldung DE 100 45 987 enthaltenen Merkmale, die als an dieser Stelle offenbart gelten sollen. Die genannte Anmeldung gehört der gleichen Anmelderin.

Eine sinnvolle fortbildende Maßnahme kann darin bestehen, weitere sehr flach bauende Kühler in der Frontwand der Anordnung einzusetzen. Die dazu erforderliche Öffnung in der Frontwand kann von der Innenseite der Frontwand mit einer Abdeckung versehen sein, die im Betrieb des Radialventilators durch den im Inneren herrschenden Druck geschlossen gehalten wird. Es können darüber hinaus oder alleine in gleicher Weise verschließbare Öffnungen in der Frontwand angeordnet sein, um den Volumenstrom der Kühlluft im Staudruckbetrieb anzuheben.

Die Erfindung wird nachfolgend in Ausführungsbeispielen beschrieben.

Die beigefügten Figuren zeigen folgendes:
- Fig. 1: Perspektivansicht auf die Frontwand der Anordnung;
- Fig. 2: Perspektivansicht auf die Rückwand der Anordnung;
- Fig. 3: Vertikalschnitt durch die Anordnung;
- Fig. 4: Schnitt durch einen Teil des Wärmetauschers;
- Fig. 5: Schnitt durch einen anderen Teil des Wärmetauschers;
- Fig. 6: Perspektivansicht einer anderen Ausführungsform;

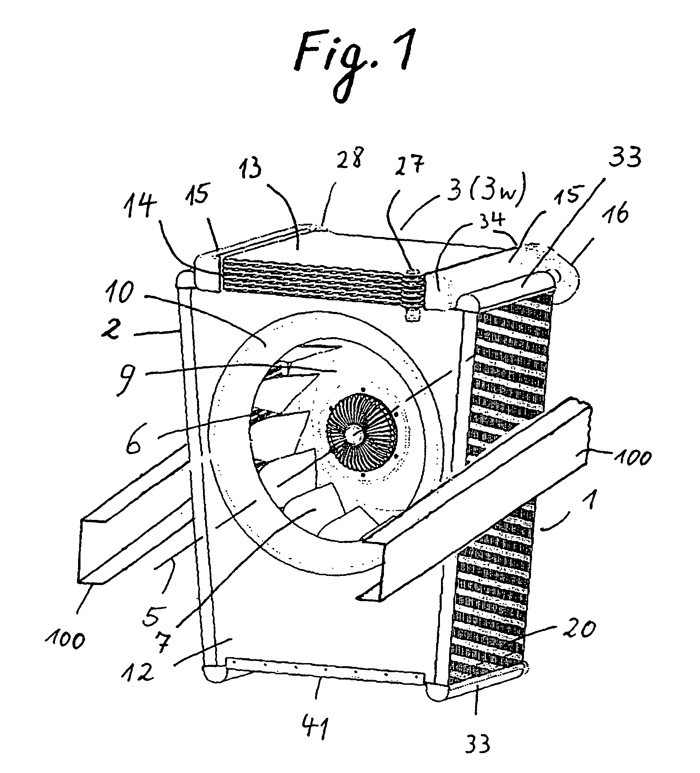

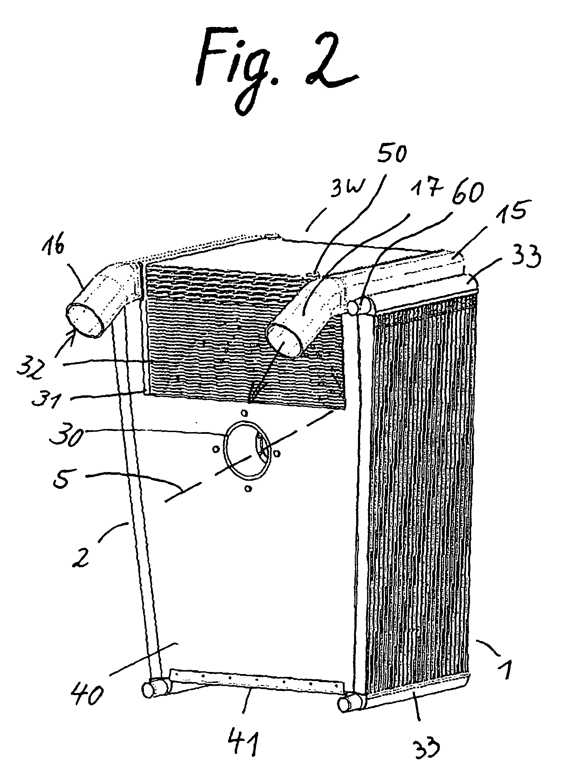

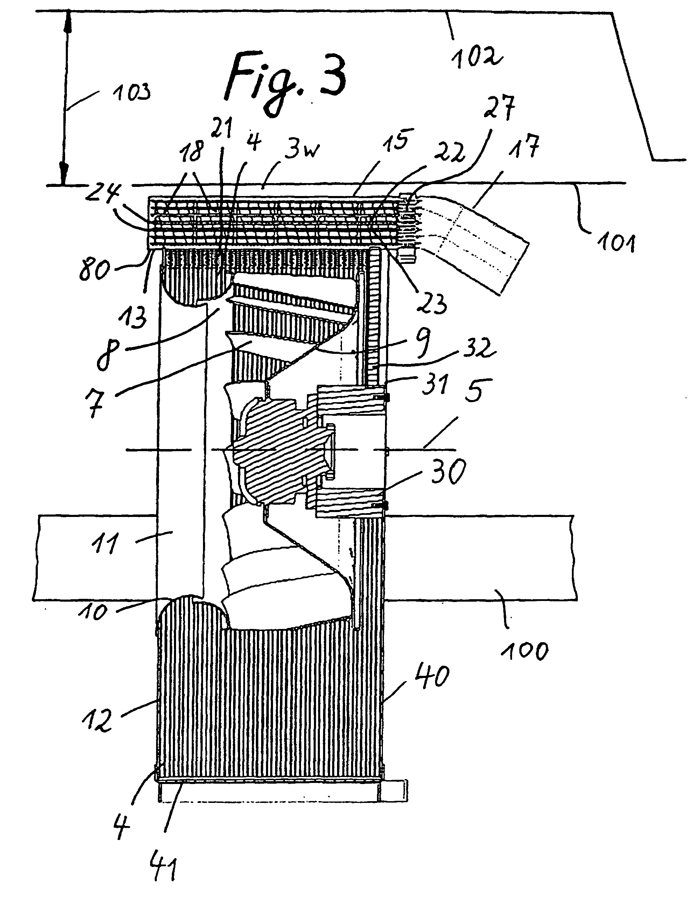

Die Anordnung besteht gemäß Fig. 1 aus rechts und links angeordneten Kühlmittelkühlern **1; 2** und einem oben angeordneten Ladeluftkühler **3; 3w** und ist für schwere Nutzfahrzeuge vorgesehen. In diesem Ausführungsbeispiel befindet sich unten kein Kühler. Die Unterseite ist deshalb durch die Wand **41** verschlossen. Außerdem ist die Rückseite der Anordnung mittels einer Rückwand **40** (Fig. 2; 3) verschlossen. In der Frontwand **12** befindet sich eine Ansaugöffnung **11** mit einer Düse **10,** die in diesem Ausführungsbeispiel nicht zentral in der Frontwand **12,** sondern geringfügig zum oberen Bereich verschoben, angeordnet wurde. In der Ansaugöffnung **11** sind die Ausblasschaufeln **7** und die Rückwand **9** des Laufrades des Radialventilators **6** zu erkennen. Die Achse **5** des Radialventilators **6** wurde durch eine gestrichelte Linie kenntlich gemacht. In Richtung dieser Achse **5** wird die Kühlluft angesaugt, radial umgelenkt und in Richtung auf die Kühler **1; 2;** und auf die untere, zum Inneren der Anordnung weisende Breitseite **13** des Wärmetauschers **3w** geblasen. Die untere Breitseite **13** ist identisch mit der in Fig. 1 gezeigten oberen Breitseite **13.** Eine gerade oder als Luftleitelement ausgebildete verformte Zwischenwand ist in diesem Ausführungsbeispiel nicht vorgesehen. Die Kühler **1; 2;** besitzen ein bekanntes Kühlnetz **20,** bestehend aus Flachrohren **4** mit dazwischen angeordneten Wellrippen **21,** wobei das Kühlnetz **20** in Fig. 3 detaillierter gezeigt ist. Die Flachrohre **4** erstrecken sich jeweils zwischen den je zwei Sammelkästen **33** der seitlichen Kühler **1; 2,** so dass sie quer zur Ventilatorachse **5** verlaufen. Zur Kühlung der Ladeluft wird ein Wärmetauscher **3w** vorgesehen, der mittels dem Kühlmittel des nicht gezeigten Motors des Nutzfahrzeugs die Kühlung übernimmt. An zwei gegenüberliegenden Schmalseiten **14** des Wärmetauschers **3w** ist je ein Luftsammelkasten **15** angeordnet. An der, in Fahrtrichtung des Nutzfahrzeuges gesehen, nach hinten, zum nicht gezeigten Motor weisenden Stirnseite **34** des Luftsammelkastens **15** ist ein Eintrittsanschluß **16** für die heiße Ladeluft angeordnet. Der andere Luftsammelkasten **15** besitzt dort den Austrittsanschluß **17.** Der linke Luftsammelkasten **15** bildet mit dem angrenzenden Sammelkasten **33** des Kühlers **2** die linke, obere Kante der kastenförmigen Anordnung aus und der rechte Luftsammeikasten **15** mit dem angrenzenden Sammelkasten **33** des Kühlers **1** die entsprechende rechte, obere Kante.

In den Fig. 1 und 3 wurden die Längsholme **100** des Nutzfahrzeuges schematisch eingezeichnet, an denen die Anordnung in nicht näher gezeigter Weise befestigt ist. Die Anordnung besitzt einen trapezartigen Querschnitt, wobei sie unten etwas schmaler ist als oben, wo der Wärmetauscher **3w** angeordnet ist. In Fig. 3 wurde zusätzlich der Kabindenboden **101** des Nutzfahrzeuges lediglich durch einen Strich angedeutet. Mit **102** wurde der Kabinenboden aus dem Stand der Technik bezeichnet. Der Abstand **103** zwischen den beiden Böden **101** und **102** zeigt an, dass es gelungen ist, die Anordnung so auszubilden, dass ein ebener Kabinenboden **101** erreicht wurde. Außerdem paßt die Anordnung in das vorhandene Nutzfahrzeug, ohne dessen Längsholme **100** oder andere wesentliche Teile des Nutzfahrzeuges zu verändern.

Die Anordnung ist in hier nicht näher gezeigter Weise zu einer sehr stabilen und festen Baueinheit zusammengefügt worden. Die stabile Rückwand **40** der Anordnung besitzt, wie die Fig. 2 und 3 zeigen, geringfügig oberhalb ihres Zentrums das Lager **30** des Radialventilators **6,** der in nicht näher dargestellter Weise vom Motor des Nutzfahrzeuges angetrieben wird. Oberhalb des Lagers **30** ist eine etwa rechteckige Öffnung **31** in der Rückwand **40** vorhanden. In dieser Öffnung **31** befindet sich ein Kondensator **32** für die Klimaanlage des Nutzfahrzeuges. Es sei jedoch darauf hingewiesen, dass es sich hier sehr wohl auch um einen anderen Wärmetauscher oder Kühler handeln könnte, wobei auch der Ort in der Rückwand **40** der Anordnung frei und dem Zweck entsprechend gewählt werden kann. Auch auf die rechteckige Form der Öffnung **31** bzw. des dort eingesetzten Wärmetauschers kommt es nicht besonders an. Es sei auch ausdrücklich betont, dass die in diesem Ausführungsbeispiel mit der Wand **41** verschlossene Unterseite der Anordnung sehr wohl ebenfalls mit einem Kühler oder dergleichen ausgerüstet werden kann. Insbesondere aus der Fig. 3 ist zu sehen, dass der Wärmetauscher **3w** nach vorne und hinten einen Überstand **80,** über die übrige Anordnung hinausreichend, aufweist. Diese Maßnahme ist vorteilhaft, um die Kühlleistung des Wärmetauschers **3w** den Anforderungen des speziellen Anwendungsfalls anzupassen. Im vorliegenden Zusammenhang erlaubt ein solcher Überstand **80** selbstverständlich auch eine flachere Bauweise des Wärmetauschers **3w,** wodurch die Gesamtbauhöhe der Anordnung zu reduzieren ist und wodurch demzufolge die Erfüllung der Aufgabenstellung unterstützt wird.

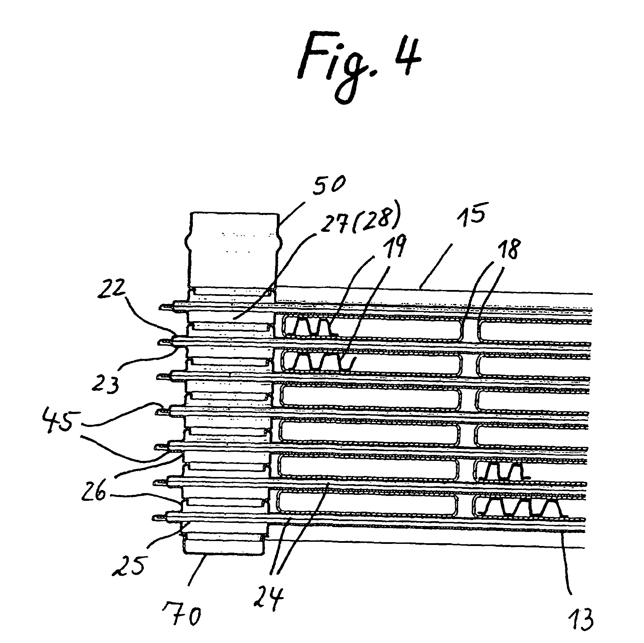

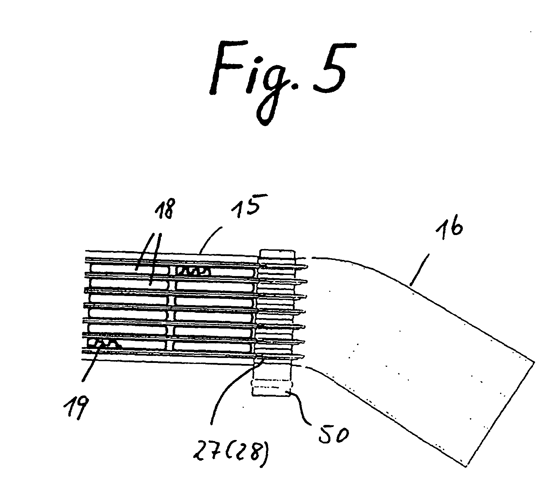

Die Fig. 4 und 5 zeigen, auch in Verbindung mit den bereits beschriebenen Figuren, wie der Wärmetauscher **3w** des Ausführungsbeispiels im Inneren aufgebaut ist. Die Luftsammelkästen **15** besitzen den Enden der Flachrohre **18** entsprechende nicht gezeigte Öffnungen, die mit den Enden der Flachrohre **18** dicht verbunden, beispielsweise verlötet sind. Dadurch kann die heiße Ladeluft, die am Eintrittsstutzen **16** in den Luftsammelkasten **15** eintritt, durch die Flachrohre **18** zum gegenüberliegenden Luftsammelkasten **15** strömen, um denselben, nach erfolgtem Wärmeaustausch mit der Kühlflüssigkeit, am Austrittsstutzen **17** zu verlassen. In den Flachrohren **18** sind Turbulatoren **19** oder dergleichen angeordnet, um die fizienz des Wärmeaustausches zu verbessern. In den Fig. 4 und 5 wurde das lediglich angedeutet.

Insbesondere aus der Fig. 4 geht der weitere Aufbau des Wärmetauschers **3w** auf der Kühlflüssigkeitsseite hervor. Auf der Kühlflüssigkeitsseite sind eine Vielzahl von umgeformten Platten **22** und **23** vorhanden. Die Platten **22** und **23** sind etwa von rechteckiger Form und sind in der Größe etwas kleiner als die beiden gegenüberliegenden Breitseiten **13** des Wärmetauschers **3w.** Dabei kann die von der Kühlluft angeblasene Breitseite **13** entweder nur aus dieser, etwa der Plattenabmessung entsprechenden Breitseite **13** gebildet sein oder selbstverständlich, wie gezeigt, auch noch Teile der zum Inneren der Anordnung weisenden Seite der beiden oder wenigstens Teile eines der Luftsammelkästen **15** einschließen. Dies ist eine reine, dem jeweiligen Anwendungsfall geschuldete konstruktive Gestaltung. Die Platten **22; 23** besitzen jeweils zwei identische Öffnungen **25** (nur eine gezeigt). Die Öffnungen **25** sind mit topfartigen Durchzügen **26** versehen. Jeweils eine Platte **22** und eine andere Platte **23** sind, wie in Fig. 4 gezeigt, zusammengefügt worden und bilden dadurch einen Strömungskanal **24** für die Kühlflüssigkeit aus. Die Strömungskanäle **24** befinden sich jeweils zwischen den Reihen der Flachrohre **18** bzw. die Strömungskanäle **24** und die Reihen der Flachrohre **18** sind in abwechselnder Reihenfolge zusammengefügt worden. Außerdem befinden sich die mit jeweils einem Durchzug **26** versehenen Öffnungen **25** auf einer Vertikalen, so dass durch das Zusammenfügen der Platten **22; 23** ein Eintrittssammelraum **27** und ein Austrittssammelraum **28** für die Kühlflüssigkeit gebildet ist. Auch diese Ein - und Austrittssammelräume **27; 28** sind mit geeigneten Anschlußstutzen **50** versehen, um die entsprechenden nicht gezeigten Kühlflüssigkeitsleitungen anschließen zu können. Der umlaufende Rand **45** jeder Platte **22** und **23** ist quasi abgesetzt und zwar so, wie es in der Fig. 4 gezeigt ist. Dadurch wurde eine gute Nahtvorbereitung für die Lötverbindung zwischen den Platten **22, 23** geschaffen. Ebensolche allerdings an sich bekannte Abbiegungen befinden sich an den Durchzügen **26,** um die Lötverbindung des jeweiligen Durchzugs **26** einer Platte **22** mit dem Durchzug **26** der benachbarten Platte **23** zu gestatten. Die Sammelräume **27** und **28** sind am dem Stutzen **50** gegenüberliegenden Ende mit einer Abdeckkappe **70** verschlossen. Es macht Sinn, an der oberen und unteren Breitseite **13** eine etwas dickere Deckplatte (oben) und eine Grundplatte (unten) anzubringen, die den Bereich der Flachrohre **18** und der Strömungskanäle **24** überdecken. Auf deren zeichnerische Darstellung wurde hier jedoch verzichtet.

Innerhalb der Strömungskanäle **24** sind die Platten **22** und **23** oder wenigstens eine der Platten **22** oder **23** mit Noppen oder ähnlichen Einprägungen versehen, die eine Lötverbindung zwischen den Platten **22** und **23** gestatten. Dadurch wird die Festigkeit in den Strömungskanälen **24** erhöht. (nicht gezeigt)

Sämtliche beschriebenen Einzelteile des Wärmetauschers **3z** bestehen aus lotbeschichtetem Aluminiumblech. Bevorzugt sind auch die Luftsammelkästen 15 aus Aluminium. Jedoch können die Sammelkästen **33** der Kühlmittelkühler **1** auch aus Kunststoff gemacht sein.

Insbesondere was die geschilderten konstruktiven Ausbildungen der Platten **22, 23** bzw. deren Sammelräume **27, 28** und der Anschlußstutzen **50** betrifft, handelt es sich auch dabei lediglich um eine für dieses Ausführungsbeispiel bevorzugte Ausbildung. Hier nicht gezeigte, aber ebenfalls mit Vorteil mögliche Ausbildungen sind Gegenstand der noch nicht veröffentlichten deutschen Anmeldungen DE 100 45 987 und DE 100 41 795, die ebenfalls der gleichen Anmelderin gehören. Insbesondere die Lehre der erstgenannten Anmeldung ist darauf gerichtet, die Sammelkästen **33** und diejenigen Sammelkästen **15** der benachbarten Kühler bzw. Wärmetauscher direkt zu verbinden. Der gesamte Inhalt dieser Anmeldungen soll deshalb als an dieser Stelle ebenfalls offenbart gelten und somit zum Umfang der Offenbarung der vorliegenden Anmeldung gehören. Unter Bezugnahme, beispielsweise auf die beiliegende Fig. 2, bedeutet das, dass der obere Sammelkasten **33** des Kühlmittelkühlers **1** der Austrittssammelkasten ist. Dieser Austrittssammelkasten besitzt einen Anschlußstutzen **60.** Nach der Lehre der erstgenannten Anmeldung sind der Austrittsstutzen **60** direkt mit dem Eintrittsstutzen **50** des Wärmetauschers **3w** verbunden. Ein Teil der abgekühlten Kühlflüssigkeit kann somit unmittelbar in den Wärmetauscher **3w** geleitet werden und dort die Ladeluft kühlen. Somit müssen nicht unbedingt raumgreifende Zu - und Abflußleitungen für den Wärmetauscher **3w** vorhanden sein.

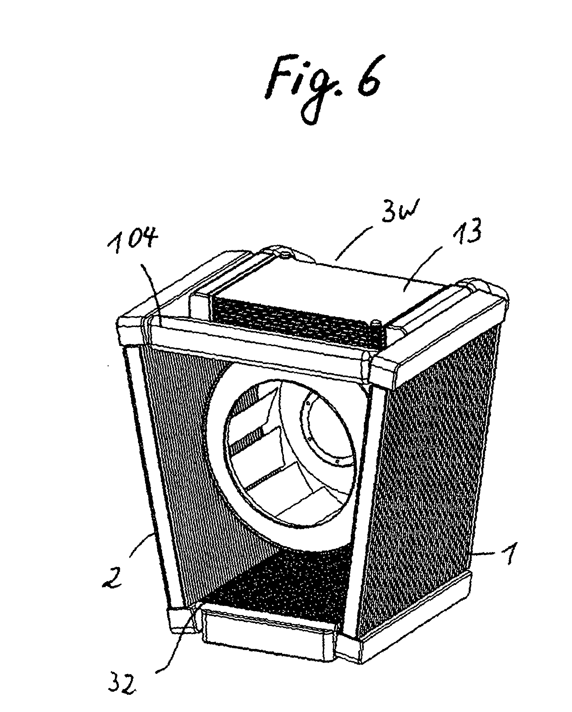

Die Fig. 6 zeigt ein zweites Ausführungsbeispiel, in dem ein kleinerer Wärmetauscher **3w** vorgesehen wurde, dessen Breitseite **13** nicht die gesamte Tiefe der Anordnung abdeckt. Dadurch wurde Platz geschaffen, um das Ausdehnungsgefäß **104** unterzubringen. In dieser Darstellung wurde die Frontwand **12** nicht gezeichnet. Im Unterschied zu den vorstehend beschriebenen Figuren wurde in diesem Ausführungsbeispiel auch die Unterseite mit Kühler belegt. Es handelt sich dabei um einen Kondensator **32,** der, in Luftströmungsrichtung gesehen, vor einem weiteren Kühler angeordnet wurde.

## Patentansprüche

1. Anordnung zur Kühlung (Temperierung) von Betriebsstoffen für Nutzfahrzeuge, mit mehreren einzelnen Kühlem (1, 2,), die derart angeordnet sind, dass die Kühlrohre (4) des Kühlnetzes (20) der Kühler (1, 2, ) quer zur Achse (5) des im Inneren der Anordnung rotierenden Laufrades eines Radialventilators (6) verlaufen, der Ausblasschaufeln (7), Deckscheibe (8) und Rückwand (9) aufweist, wobei der Radialventilator (6) in seinen Betriebsphasen Frischluft über eine mit einer Düse (10) versehenen Ansaugöffnung (11) in der Frontwand (12) ansaugt und als Kühlluft durch die Kühler (1; 2;) der Anordnung hindurch bläst, die durch eine Rückwand (40) verschlossen ist, welche das Lager (30) des Radialventilators (6) trägt, wobei die Anordnung einen Ladeluftkühler (3) mit Luftsammelkästen (15) aufweist, der, in Einbaulage im Nutzfahrzeug gesehen, oben querliegend angeordnet ist,
**dadurch gekennzeichnet, dass**
der Ladeluftkühler (3) ein von dem flüssigen Kühlmittel des Motors des Nutzfahrzeuges durchströmter Wärmetauscher (3w) ist, dessen zum Inneren der Anordnung weisende eine Breitseite (13) oder eine über diese Breitseite (13) reichende, eingebaute Zwischenwand von der Kühlluft anblasbar ist, wobei das Abströmen von Kühlluft nach oben im wesentlichen verhindert ist und lediglich durch das Kühlnetz (20) der anderen Kühler (1; 2) hindurchströmt.

2. Anordnung nach Anspruch 1, **dadurch gekennzeichnet, dass** der Wärmetauscher (3w) Schmalseiten (14) aufweist, wobei an zwei gegenüberliegenden Schmalseiten je ein Luftsammelkasten (15) angeordnet ist, an deren - in Fahrtrichtung des Nutzfahrzeuges gesehen - nach hinten weisenden Stirnseiten (34) je ein Eintritts - bzw. Ausstrittsanschluß (16; 17) für die Ladeluft angeordnet ist.

3. Anordnung nach den Ansprüchen 1 und 2, **dadurch gekennzeichnet, dass** die Luftsammelkästen (15) mittels mehrerer Reihen von Flachrohren (18), die Inneneinsätze (19) aufweisen, verbunden sind, dass zwischen den Flachrohren (18) jeweils zwei umgeformte Platten (22; 23) angeordnet sind, die jeweils einen Strömungskanal (24) für die Kühlflüssigkeit ausbilden.

4. Anordnung nach einem der Ansprüche 1 bis 3, **dadurch gekennzeichnet**, dassdie Abmessung (Länge x Breite) der Platten (22; 23) etwa gleich oder um die Abmessung der Luftsammelkästen (15) oder eines Teiles dieser Abmessung kleiner als die von der Kühlluft anblasbare Breitseite (13) des Wärmetauschers (3w) ist.

5. Anordnung nach Anspruch 3 und 4, **dadurch gekennzeichnet, dass** die Platten (22; 23) mit je zwei Öffnungen (25) versehen sind, um die herum topfartige Durchzüge (26) angeordnet sind, derart, dass nach dem Stapeln der Platten (22; 23) ein Eintritts - und ein Austrittssammelraum (27; 28) für die Kühlflüssigkeit gebildet ist, die sich senkrecht zu den Strömungskanälen (24) erstrecken und Anschlußstutzen (50) aufweisen.

6. Anordnung nach den Ansprüchen 1 und 3, **dadurch gekennzeichnet, dass** sich auch die Flachrohre (18) des Wärmetauschers (3w) quer zur Richtung der Achse (5) des Radialventilators (6) erstrecken, wobei jeweils ein Luftsammelkasten (15) des Wärmetauschers (3w) mit einem Sammelkasten (33) der Kühler (1;2) eine Kante der Anordnung ausbildet.

7. Anordnung nach einem der vorstehenden Ansprüche, **dadurch gekennzeichnet, dass** der Sammelkasten (33) der Austrittssammelkasten des Kühlers (1) ist und sein Austritt (60) unmittelbar mit dem Anschlußstutzen (50) des Wärmetauschers (3w) verbunden ist, um einen Teil der abgekühlten Kühlflüssigkeit unmittelbar in den Wärmetauscher (3w) zu leiten.

8. Anordnung nach Anspruch 1, **dadurch gekennzeichnet, dass**, wenn eine Zwischenwand die nach innen weisende Breitseite (13) des Wärmetauschers (3z) ganz oder teilweise abdeckt, dieselbe eben ist oder in der Art eines Luftleitelements verformt sein kann.

9. Anordnung nach Anspruch 1, **dadurch gekennzeichnet, dass** in der Rückwand (40) mindestens eine Öffnung (31) vorhanden ist, in der mindestens ein zusätzlicher Wärmeaustauscher, beispielsweise ein luftgekühlter Kondensator (32) angeordnet ist.

10. Anordnung nach den Ansprüchen 1 und 9, **dadurch gekennzeichnet, dass** die Öffnung (31) oberhalb und / oder unterhalb des Lagers (30) angeordnet ist.

## Claims

1. Arrangement for the cooling (thermal control) of fuels for commercial vehicles, with a plurality of individual coolers (1, 2) which are arranged in such a way that the cooling tubes (4) of the cooling network (20) of the coolers (1, 2) run transversely to the axis (5) of the impeller, rotating inside the arrangement, of a radial fan (6) which has blow-out blades (7), a cover disc (8) and a rear wall (9), the radial fan (6), in its operating phases, sucking in fresh air via an intake orifice (11) provided with a nozzle (10) and located in the front wall (12) and blowing the said fresh air as cooling air through the coolers (1, 2) of the arrangement which is closed by means of a rear wall (40) carrying the bearing (30) of the radial fan (6), the arrangement having a charge-air cooler (3) with air header boxes (15), which, as seen in the installation position in the commercial vehicle, is arranged transversely overhead, **characterized in that** the charge-air cooler (3) is a heat exchanger (3w) through which the liquid coolant of the engine of the commercial vehicle flows and of which a wide side (13) pointing to the interior of the arrangement or an installed intermediate wall extending over this wide side (13) can have the cooling air blowing against it, the outflow of cooling air upwards being essentially prevented and flowing solely through the cooling network (20) of the other coolers (1; 2).

2. Arrangement according to Claim 1, **characterized in that** the heat exchanger (3w) has narrow sides (14), each of two opposite narrow sides having arranged on it an air header box (15), on the end faces (34) of which, pointing rearwards, as seen in the direction of travel of the commercial vehicle, is arranged in each case an inlet or outlet connection (16; 17) for the charge air.

3. Arrangement according to Claims 1 and 2, **characterized in that** the air header boxes (15) are connected by means of a plurality of rows of flat tubes (18) which have inner inserts (19), and **in that** between the flat tubes (18) are arranged in each case two formed plates (22; 23) which in each case produce a flow duct (24) for the cooling liquid.

4. Arrangement according to one of Claims 1 to 3, **characterized in that** the dimension (length x width) of the plates (22; 23) is approximately equal to or smaller by the amount of the dimension of the air header boxes (15) or of part of this dimension than that of that wide side (13) of the heat exchanger (3w) which can have the cooling air blowing against it.

5. Arrangement according to Claims 3 and 4, **characterized in that** the plates (22; 23) are each provided with two orifices (25), around which pot-like rim holes (26) are arranged in such a way that, after the stacking of the plates (22; 23), an inlet and an outlet collecting space (27; 28) for the cooling liquid is formed, the said collecting spaces extending perpendicularly to the flow ducts (24) and having connection pieces (50).

6. Arrangement according to Claims 1 and 3, **characterized in that** the flat tubes (18) of the heat exchanger (3w) also extend transversely to the direction of the axis (5) of the radial fan (6), in each case an air header box (15) of the heat exchanger (3w) forming with a header box (33) of the coolers (1; 2) one edge of the arrangement.

7. Arrangement according to one of the preceding claims, **characterized in that** the header box (33) is the outlet header box of the cooler (1), and its outlet (60) is connected directly to the connection piece (50) of the heat exchanger (3w), in order to conduct part of the cooled cooling liquid directly into the heat exchanger (3w).

8. Arrangement according to Claim 1, **characterized in that**, when an intermediate wall completely or partially covers the inward-pointing wide side (13) of the heat exchanger (3z), the said intermediate wall is plane or may be formed in the manner of an air guide element.

9. Arrangement according to Claim 1, **characterized in that** in the rear wall (40) there is at least one orifice (31) in which at least one additional heat exchanger, for example an air-cooled condenser (32), is arranged.

10. Arrangement according to Claims 1 and 9, **characterized in that** the orifice (31) is arranged above and/or below the bearing (30).

## Revendications

1. Agencement de refroidissement (de maintien à température) de matières techniques pour véhicules utilitaires, doté de plusieurs refroidisseurs individuels (1; 2) qui sont disposés de telle sorte que les tubes de refroidissement (4) du réseau de refroidissement (20) des refroidisseurs (1; 2) s'étendent transversalement par rapport à l'axe (5) de la roue à aubes, qui tourne à l'intérieur de l'agencement, d'un ventilateur radial (6) qui présente des aubes de refoulement (7), une plaque de recouvrement (8) et une paroi arrière (9), le ventilateur radial (6) aspirant dans ses phases de travail de l'air frais par une ouverture d'aspiration (11) dotée d'un ajutage (10) et située dans la paroi avant (12) et le refoulant en tant qu'air refroidi à travers les refroidisseurs (1; 2) de l'agencement qui est fermé par une paroi arrière (40) qui porte le palier (30) du ventilateur radial (6), l'agencement présentant un refroidisseur (3) d'air de suralimentation qui est doté de caissons (15) de collecte d'air et qui, lorsqu'il est en position montée sur le véhicule utilitaire, est disposé transversalement dans le haut,
**caractérisé en ce que**
le refroidisseur (3) d'air de suralimentation est un échangeur de chaleur (3w) traversé par le fluide de refroidissement liquide du moteur du véhicule utilitaire et dont un large côté (13) tourné vers l'intérieur de l'agencement ou une paroi intermédiaire incorporée qui déborde au-delà de ce large côté (13) peuvent être balayés par l'air de refroidissement, l'évacuation de l'air de refroidissement vers le haut étant essentiellement empêchée et cet air de refroidissement traversant uniquement le réseau de refroidissement (20) de l'autre refroidisseur (1; 2).

2. Agencement selon la revendication 1, **caractérisé en ce que** l'échangeur de chaleur (3w) présente des côtés étroits (14), un caisson (15) de collecte d'air étant disposé sur chacun des deux côtés étroits opposés et un raccordement d'entrée ainsi qu'un raccordement de sortie (16; 17) pour l'air de suralimentation étant disposé sur ses côtés frontaux (34) dirigés vers l'arrière dans le sens du déplacement du véhicule utilitaire.

3. Agencement selon les revendications 1 et 2, **caractérisé en ce que** les caissons (15) de collecte d'air sont reliés au moyen de plusieurs séries de tubes plats (18) qui présentent des garnitures intérieures (19) et **en ce qu'**entre les tubes plats (18) sont disposées à chaque fois deux plaques (22; 23) déformées qui forment chacune un canal d'écoulement (24) pour le liquide de refroidissement.

4. Agencement selon l'une des revendications 1 à 3, **caractérisé en ce que** les dimensions (longueur x largeur) des plaques (22; 23) sont sensiblement égales à celles du côté large (13) de l'échangeur de chaleur (3w) qui peut être attaqué par l'air de refroidissement ou en sont diminuées des dimensions des caissons (15) de collecte d'air ou d'une partie de ces dimensions.

5. Agencement selon les revendications 3 et 4, **caractérisé en ce que** les plaques (22; 23) sont toutes deux dotées de deux ouvertures (25) autour desquelles sont disposées des extractions (26) en forme de pot de telle sorte qu'après l'empilement des plaques (22; 23) soient formées une chambre de collecte d'entrée et une chambre de collecte de sortie (27; 28) pour le liquide de refroidissement, ces chambres s'étendant perpendiculairement aux canaux d'écoulement (24) et présentant des tubulures de raccordement (50).

6. Agencement selon les revendications 1 et 3, **caractérisé en ce que** les tubes plats (18) de l'échangeur de chaleur (3w) s'étendent également transversalement par rapport à la direction de l'axe (5) du ventilateur radial (6), un caisson (15) de collecte d'air de l'échangeur de chaleur (3w) formant à chaque fois un bord de l'agencement avec un caisson de collecte (33) du refroidisseur (1; 2).

7. Agencement selon l'une des revendications précédentes, **caractérisé en ce que** le caisson de collecte (33) est le caisson de collecte de sortie du refroidisseur (1), dont la sortie (60) est reliée directement à la tubulure de raccordement (50) de l'échangeur de chaleur (3w) pour conduire une partie du liquide de refroidissement refroidi directement dans l'échangeur de chaleur (3w).

8. Agencement selon la revendication 1, **caractérisé en ce que** lorsqu'une paroi intermédiaire couvre totalement ou en partie le côté large (13) tourné vers l'intérieur de l'échangeur de chaleur (3z), elle est plane ou peut être déformée à la manière d'un élément de guidage d'air.

9. Agencement selon la revendication 1, **caractérisé en ce qu'**au moins une ouverture (31) dans laquelle est disposé au moins un échangeur supplémentaire de chaleur, par exemple un condenseur (32) refroidi par air, est prévu dans la paroi arrière (40).

10. Agencement selon les revendications 1 et 9, **caractérisé en ce que** l'ouverture (31) est disposée au-dessus et/ou en dessous du palier (30).
